(19) Europäisches Patentamt
European Patent Office
Office européen des brevets

(11) **EP 2 651 232 B1**

(12) **EUROPEAN PATENT SPECIFICATION**

(45) Date of publication and mention
of the grant of the patent:
**15.10.2014 Bulletin 2014/42**

(51) Int Cl.:
***A23D 7/005*** (2006.01)

(21) Application number: **11804990.7**

(22) Date of filing: **13.12.2011**

(86) International application number:
**PCT/EP2011/072580**

(87) International publication number:
**WO 2012/080227 (21.06.2012 Gazette 2012/25)**

(54) **OIL-IN-WATER EMULSION WITH IMPROVED SPATTERING BEHAVIOUR**

ÖL-IN-WASSER-EMUSION MIT VERBESSERTEM SPRITZVERHALTEN

ÉMULSION HUILE DANS L'EAU DE COMPORTEMENT SUPÉRIEUR AU MOUCHETAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2010 EP 10194852**

(43) Date of publication of application:
**23.10.2013 Bulletin 2013/43**

(73) Proprietors:
• **Unilever PLC
London EC4Y 0DN (GB)**
Designated Contracting States:
**CY GB IE MT**
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **ALDRED, Deborah, Lynne
Sharnbrook, Bedfordshire MK44 1LQ (GB)**
• **BOT, Arjen
3133 AT Vlaardingen (NL)**

(74) Representative: **van Benthum, Wilhelmus A. J.
Unilever N.V.
Unilever Patent Group
Olivier van Noortlaan 120
3133 AT Vlaardingen (NL)**

(56) References cited:
**WO-A1-2010/067059     US-A1- 2008 175 972
US-A1- 2009 142 467     US-A1- 2010 303 998**

**Description**

TECHNICAL FIELD

The invention relates to oil-in-water emulsion food products, in particular liquid emulsion products, showing improved spattering behaviour when used for shallow frying.

BACKGROUND AND PRIOR ART

The use of oil-in-water emulsions for frying often is accompanied by spattering. Usually a distinction is made between primary spattering and secondary spattering. Primary spattering occurs when a frying product is an emulsion phase containing a dispersed aqueous phase. When heating the emulsion to a temperature over 100°C the dispersed water will evaporate under more or less spattering.

With secondary spattering is denoted spattering which occurs when water or a water containing food product such as meat is brought into a heated frying emulsion.

The present invention is related particularly to a method for improving both primary and secondary spattering behaviours. Primary and secondary spattering behaviours are measured by determining the spattering values SV1 and SV2 according to a protocol as specified in the examples section.

Common anti-spattering agents comprise emulsifiers in a broad sense e.g. lecithin, hydrolysed lecithin, esters of citric acid (Citrem™) and cooking salt. The effect of sole lecithin on spattering is small. When lecithin is used in combination with cooking salt, well performing cooking emulsions having SV2 values up to 8 can be achieved. Lecithin, however, has the disadvantage that it may decompose at high frying temperatures and causes bad smell, discoloration and foaming. The cooking salt (specifically sodium chloride) is not recommended from a nutritional point of view, but has to be added in a substantial amount, exceeding 0.3 wt.% to get good spattering behaviour.

For improving spattering behaviour EP 477825 and EP 771531 disclose the use of citric acid esters as synthetic antioxidants.

US 3,946,122 and US 5,436,021 disclose water and oil emulsions comprising a citric acid ester of a mono- or diglyceride of fatty acids.

WO 01/84945 uses a citric ester of a partial fatty acid glyceride which results in SV2 values of at least 4.

EP 775444 discloses a pourable emulsion composition comprising herbs, spices, nuts or seeds and 1-10 wt% salt.

WO 03/051136 discloses a transparent oil which contains stably dispersed particles which may have a vegetable origin.

A relatively high salt content is typical for most prior art cooking oils which show an improved spattering behaviour. The presently available alternatives for lecithin and cooking salt consist of non-natural substances.

H. Pardun, in Fette, Seifen, Anstrichmittel 79(5), 1977, pp. 195-203 describes the use of milled soy protein concentrates as antispattering agents in margarines. The antispattering agents proposed by Pardun have the disadvantage that when heated in the pan during shallow frying, they may decompose and give char formation. Moreover, we have found that when margarines of Pardun are prepared using modern margarine equipment, such as a votator, the antispattering agents are no longer effective.

TESTS AND DEFINITIONS

Determination of spattering value in a spattering test

Primary spattering (SV1) was assessed under standardised conditions in which an aliquot of a food product was heated in a glass dish and the amount of fat spattered onto a sheet of paper held above the dish was assessed after the water content of the food product had been evaporated by heating.

Secondary spattering (SV2) was assessed under standardised conditions in which the amount of fat spattered onto a sheet of paper held above the dish is assessed after injection of a quantity of 10 ml water into the dish.

In assessment of both primary and secondary spattering value, 25 g food product was heated in a 15 cm diameter glass bowl on an electric plate to about 205 °C. The fat that spattered out by force of expanding evaporating water droplets was caught on a sheet of paper situated at 25 cm above the pan (SV1 test). Subsequently a quantity of 10 ml water was poured into the bowl and again the fat that spattered out of by force of expanding evaporating water droplets was caught on a sheet of paper situated above the pan (SV2 test).

The images obtained were compared with a set of standard pictures number 0-10 whereby the number of the best resembling picture was recorded as the spattering value. 10 indicates no spattering and zero indicates very bad spattering. The general indication is as follows in table 1.

Table 1- Scoring table for spattering value

| Score | Comments |
|---|---|
| 10 | Excellent |
| 8 | Good |
| 6 | Passable |
| 4 | Unsatisfactory for SV1, almost passable for SV2 |
| 2 | Very poor |

Typical results for household margarines (80 wt.% fat) are 8.5 for primary spattering (SV1) and 4.6 for secondary spattering (SV2) under the
conditions of the above mentioned test.

Oil-in-water food products

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

Xn-C-X5-9-C-C-X11-39-C-X8-23-C-X5-9-C-C-X6-18-C-Xm (SEQ ID No. 1)
where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:
Xn-C-X1-50-C-X0-5-C-X1-100-C-X1-100-C-X1-50-C-X0-5-C-X1-50-C-Xm (SEQ ID No. 2)
or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.
Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.
Hydrophobin-like proteins have also been identified in filamentous bacteria, such as Actinomycete and Steptomyces sp. (WO01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.
The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as Cryphonectria parasitica which secretes a hydrophobin termed cryparin (MacCabe and Van Alfen, 1999, App. Environ. Microbiol 65:

5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in Agaricus bisporus; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera Saccharomyces, Kluyveromyces, Pichia, Hansenula, Candida, Schizo saccharomyces and the like, and filamentous species such as (but not limited to) those of the genera Aspergillus, Trichoderma, Mucor, Neurospora, Fusarium and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term " hydrophobins" .

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Oil

As used herein the term "oil" is used as a generic term for lipids and fats either pure or containing compounds in solution. Oils can also contain
particles in suspension.

Lipids

As used herein the term "lipids" is used as a generic term for long chain fatty acids or long chain alcohols wherein the term "long chain" is used as a generic term for 12 carbon atoms or more.

Fats

As used herein the term " fats" is used as a generic term for compounds containing more than 80% triglycerides. They can also contain diglycerides, monoglycerides and free fatty acids. In common language, fats that are liquid at room temperature are often referred to as oils but herein the term fats is also used as a generic term for such liquid fats. Fats include: plant oils (for example: Allanblackia Oil, Apricot Kernel Oil, Arachis Oil, Arnica Oil, Argan Oil, Avocado Oil, Babassu Oil, Baobab Oil, Black Seed Oil, Blackberry Seed Oil, Blackcurrant Seed Oil, Blueberry Seed Oil, Borage Oil, Calendula Oil, Camelina Oil, Camellia Seed Oil, Castor Oil, Cherry Kernel Oil, Cocoa Butter, Coconut Oil, Corn Oil, Cottonseed Oil, Evening Primrose Oil, Grapefruit Oil, Grapeseed Oil, Hazelnut Oil, Hempseed Oil, Jojoba Oil, Lemon Seed Oil, Lime Seed Oil, Linseed Oil, Kukui Nut Oil, Macadamia Oil, Maize Oil, Mango Butter, Meadowfoam Oil, Melon Seed Oil, Moringa Oil, Olive Oil, Orange Seed Oil, Palm Oil, Palm Kernel Oil, Papaya Seed Oil, Passion Seed Oil, Peach Kernel Oil, Plum Oil, Pomegranate Seed Oil, Poppy Seed Oil, Pumpkins Seed Oil, Rapeseed (or Canola) Oil, Red Raspberry Seed Oil, Rice Bran Oil, Rosehip Oil, Safflower Oil, Seabuckthorn Oil, Sesame Oil, Soyabean Oil, Strawberry Seed Oil, Sunflower Oil, Sweet Almond Oil, Walnut Oil, Wheat Germ Oil); fish oils (for example: Sardine Oil, Mackerel Oil, Herring Oil, Cod-liver Oil, Oyster Oil); animal oils (for example: butter or Conjugated Linoleic Acid); or any mixture and/or fraction and/or hardening
and/or interesterification thereof.

Aeration

The term " aerated" means that gas has been intentionally incorporated into the product, such as by mechanical means. The gas can be any gas, but is preferably, particularly in the context of food products, a food-grade gas such as air, nitrogen or carbon dioxide. The extent of aeration is typically defined in terms of "overrun". In the context of the present invention, overrun (in percent) is defined in volume terms as:

$$\text{Overrun} = \frac{(\text{volume of the final aerated product} - \text{volume of the mix})}{\text{volume of the mix}} \times 100$$

SUMMARY OF THE INVENTION

The object of the invention is to provide an oil-in-water emulsion having a oil content of 25% to 60% (w/w) and containing

• 0.01% to 3% (w/w) hydrophobin, preferably less that 2% (w/w),
• less than 1.5% non melting compounds

Non-melting compounds is defined as the total amount of protein and carbohydrates (including polysaccharides) in the product.
Since the oil content of the oil in water emulsion is between 25 and 60% (w/w), it means that the oil to water ratio is between 33.3 % and 150% (w/w).
Preferably the oil-in-water emulsion food product contains less than 1 % w/w hydrophobin, more preferably less than 0.5 % w/w.
Preferably also the hydrophobin is a class II hydrophobin, more preferably HFB II. In another preferred embodiment of the invention, the hydrophobin is HFB I.
The overrun of the oil-in-water emulsion food product is preferably less than 10%, more preferably less than 5%.

DETAILS OF THE INVENTION

The following examples illustrate the invention.
Various oil-in-water emulsions were produced which had a fat content of between 28% and 56 %, with our without HFB, varying the amount of HFB and using different types of HFB.
The emulsions were based on "Blue Band Light - Koken, bakken en roerbakken" (Unilever Nederland), a commercial liquid shallow frying product containing 56% of oil, 1.5% salt (sodium chloride), <0.5% fibres (xanthan, guar gum), <0.1 % protein (soy protein), sunflower lecithin, polyoxyethylene-20-sorbitan monostearate, and some flavours, vitamins, preservatives and colourants.
The amount of non-melting components was always less than 1.5% w/w.

**Table 2**

|                          | % Fat | % HFB I | % HFB II | SV 1 | SV 2 |
|--------------------------|-------|---------|----------|------|------|
| **Ref BB Light**         | 56    |         | 0.00     | 7.25 | 7.75 |
| **BB Light + 0.007% HfB-II** | 56    |         | 0.007    | 8.25 | 8    |
| **BB Light + 0.018% HfB-II** | 56    |         | 0.018    | 9.5  | 8.25 |
| **BB Light + 0.05% HfB-II**  | 56    |         | 0.05     | 9.75 | 9.5  |
| **BB Light + 0.1% HfB-II**   | 56    |         | 0.10     | 10   | 9.75 |
| **BB Light + 1.0% HfB-II**   | 56    |         | 1.00     | 10   | 10   |
| **BB Light + 0.1 % HfB-I**   | 56    | 0.1     |          | 10   | 10   |
| **75% BB Light + 25% water** | 42    |         | 0.00     | 7.75 | 8.25 |

(continued)

|  | % Fat | % HFB I | % HFB II | SV 1 | SV 2 |
|---|---|---|---|---|---|
| **75% BB Light + 25% water + 0.05% HfB-II** | **42** |  | **0.05** | **10** | **10** |
| **50% BB Light + 50% water** | **28** |  | **0.00** | **7.75** | **7.5** |
| **50% BB Light + 50% water + 0.05% HfB-II** | **28** |  | **0.05** | **10** | **10** |

These experiments show that:

- The addition of HfB-II to a oil-in-water shallow frying emulsion has a beneficial effect on spattering (higher SV1 and SV2) if the amount of HfB is above 0.01%.
- HfB-I and HfB-II behave the same (at 0.1 % HfB)
- HfB-II has a beneficial effect for a range of fat levels (28-56%)

## Claims

1. Oil-in-water emulsion food product having a oil content of 25% to 60% (w/w) and containing

    . 0.01% to 3% (w/w) hydrophobin, preferably less that 2% (w/w),
    . less than 1.5% non melting compounds

2. Oil-in-water emulsion food product according to claim 1 containing less than 1 % w/w hydrophobin.

3. Oil-in-water emulsion food product according to any preceding claim wherein the hydrophobin is a class II hydrophobin

4. Oil-in-water emulsion food product according to claim 3 wherein the hydrophobin is HFB II.

5. Oil-in-water emulsion food product according to any preceding claim wherein the overrun is less than 10%.

## Patentansprüche

1. Öl-in-Wasser-Emulsion-Nahrungsmittelprodukt mit einem Ölgehalt von 25 % bis 60 % (Gew./Gew.), enthaltend

    - 0,01 % bis 3 % (Gew./Gew.) Hydrophobin, vorzugsweise weniger als 2 % (Gew./Gew.); und
    - weniger als 1,5 % nicht-schmelzende Verbindungen.

2. Öl-in-Wasser-Emulsion-Nahrungsmittelprodukt nach Anspruch 1, enthaltend weniger als 1 % (Gew./Gew.) Hydrophobin.

3. Öl-in-Wasser-Emulsion-Nahrungsmittelprodukt nach einem der vorstehenden Ansprüche, wobei es sich beim Hydrophobin um Hydrophobin der Klasse II handelt.

4. Öl-in-Wasser-Emulsion-Nahrungsmittelprodukt nach Anspruch 3, wobei es sich beim Hydrophobin um HFB II handelt.

5. Öl-in-Wasser-Emulsion-Nahrungsmittelprodukt nach einem der vorstehenden Ansprüche, wobei der Überlauf weniger als 10 % beträgt.

## Revendications

1. Produit alimentaire en émulsion huile dans l'eau ayant une teneur en huile de 25 % à 60 % (p/p) et contenant

    - 0,01 % à 3 % (p/p) d'hydrophobine, de préférence moins de 2 % (p/p),
    - moins de 1,5 % de composés ne fondant pas.

**2.** Produit alimentaire en émulsion huile dans l'eau selon la revendication 1, contenant moins de 1 % p/p d'hydrophobine.

**3.** Produit alimentaire en émulsion huile dans l'eau selon l'une quelconque des revendications précédentes, dans lequel l'hydrophobine est une hydrophobine de classe II.

**4.** Produit alimentaire en émulsion huile dans l'eau selon la revendication 3, dans lequel l'hydrophobine est la HFB II.

**5.** Produit alimentaire en émulsion huile dans l'eau selon l'une quelconque des revendications précédentes, dans lequel le foisonnement est inférieur à 10 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 477825 A
- EP 771531 A
- US 3946122 A
- US 5436021 A
- WO 0184945 A
- EP 775444 A
- WO 03051136 A
- WO 0174864 A
- WO 9641882 A
- WO 0157076 A

**Non-patent literature cited in the description**

- **H. PARDUN.** *Fette, Seifen, Anstrichmittel,* 1977, vol. 79 (5), 195-203
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85